# EUROPEAN PATENT SPECIFICATION

(11) **EP 0 560 044 B1**
(45) Date of publication and mention of the grant of the patent: **17.01.1996**
(21) Application number: 93101618.2
(22) Date of filing: 03.02.1993
(51) Int. Cl.: A21C 11/24, A21C 11/06

(54) **Dough sheet production**
Herstellung von Teigblätten
Production de bandes de pâte

(30) Priority: 13.03.1992 US 852996
(43) Date of publication of application: 15.09.1993
(73) Proprietor: SOCIETE DES PRODUITS NESTLE S.A., CH-1800 Vevey (CH)
(72) Inventor: Barnes, Gale Jeffrey, Woodbury, CT 06798 (US); Bartoletti, Larry, Northfield, CT 06778 (US); Hsu, Jau Yann, Brookfield, CT 06804 (US); Orzech, Thomas Scott, New Milford, CT 06776 (US); Rodero, Michael, Roxbury, CT 06783 (US)
(74) Representative: Pate, Frederick George

(56) References cited:
- US-A- 4 289 470
- US-A- 4 717 328

## Description

The present invention relates to the production of a dough sheet, more particularly to the production of a dough sheet with waved edges.

Commercially, dough sheets such as lasagna with waves or undulations (hereinafter referred to as waves) at their marginal edges are usually produced by extrusion whereby the waves are created by different flow rate of the edges of the dough during high pressure extrusion caused by a difference in the pasta die opening which is narrower at the marginal edges.

In a dough sheeting process, the formation and flow of the dough sheet is slower and the pressure applied is less then in extrusion. Therefore, it is difficult to create waves at the marginal edges of sheeted dough simply by passing the dough through rollers having a narrower clearance between the lateral surfaces than between the centre surfaces of the rollers: even if any waves are created they are not as pronounced or as stable as the waves created by extrusion.

In US-A-4289470 there is described an apparatus for shaping dough ribbons to give opposite marginal edges which are undulated to provide ruffles comprising a pair of matched crimped rolls formed with opposite marginal fluted edges for shaping the dough.

We have now devised an apparatus which is simpler and less costly than that of US-A-4289470 for sheeting dough wherein at least one of the pairs of rollers is provided with circumferential grooves on the lateral surfaces and wherein the clearance between the lateral surfaces of the pair of rollers is less than the clearance between the centre surfaces of the pair of rollers, this apparatus enabling the production of a dough sheet with a significant number of waves which are superior to those prepared using the apparatus of US-A-4289470 after cooking, boiling and heat-processing because of the difference in thickness between the centre and the ends, no similar roller structure being described in US-A-4289470.

Accordingly, the present invention provides an apparatus for the production of a dough sheet having waves at the marginal edges comprising a pair of oppositely rotatable rollers consisting of a primary roller and a counter roller adapted to receive a dough sheet between them, characterised in that the clearance between the pair of rollers is greater at the centre surfaces than at the lateral surfaces and wherein one or both lateral surfaces of at least one of the rollers is provided with a circumferential groove.

Preferably both lateral surfaces of at least one of the rollers are provided with circumferential grooves.

Preferably, the primary roller is provided with a circumferential grooves. When the lateral surfaces of both rollers are provided with circumferential grooves, the grooves of the counter roller should be aligned with the grooves of the primary roller. The primary and secondary rollers may have the same or different diameters but their rotation speeds should be adjusted to ensure substantially the same surface speed to avoid tearing the dough sheet during the sheeting process.

The clearance between the pair of rollers at the centre surfaces may vary from 0.25 to 1.27 mm (0.01 to 0.05 in), preferably from 0.51 to 1.02 mm (0.02 to 0.04 in). The clearance between the pair of rollers at the lateral surfaces may vary from 0.13 to 0.64 mm (0.005 to 0.025 in.), preferably from 0.20 to 0.51 mm (0.008 to 0.020 in).

The difference in the clearance between the centre surfaces and the lateral surfaces of the pair of rollers may be from 0.03 to 1.02 mm (0.001 to 0.04 in.), preferably from 0.05 to 0.51 (0.002 to 0.02 in) and especially from 0.13 to 0.38 mm (0.005 to 0.015 in).

Advantageously, only one of the pair of rollers is profiled to provide the difference in clearance between the centre surfaces and lateral surfaces of the pair. However, if desired, both rollers may be profiled in the same way.

The circumferential grooves are preferably positioned adjacent the lateral edges of the centre surface of the primary roller. The depth of the groove may vary from 1.02 to 6.35 mm (0.04 to 0.25 in.), preferably from 2.54 to 5.08 mm (0.1 to 0.2 in). The width of the groove may conveniently be from 0.51 to 5.08 mm (0.02 to 0.2 in) and preferably from 1.27 to 4.06 mm (0.05 to 0.16 in). The grooves are preferably less than 25.4 mm (1 in). from the edge of the roller and generally, the less the distance from the edge, the greater the wave formation. The distance from the edge is conveniently from 2.54 to 19.05 mm (0.1 to 0.75 in).

When the lateral surfaces of only one of the pairs of rollers is provided with circumferential grooves, the other roller may optionally be formed with a pair of circumferential ridges aligned with the circumferential grooves and having a height and width less than the depth and width of the corresponding circumferential grooves.

The present invention also provides a process for the production of a dough sheet having waves at the marginal edges which comprises passing a dough sheet between a pair of oppositely rotating rollers consisting of a primary roller and a counter roller characterised in that the clearance between the pair of rollers is greater at the centre surfaces than at the lateral surfaces wherein one or both lateral surfaces of at least one of the rollers is formed with a circumferential groove, and wherein each marginal edge of the dough sheet is positioned laterally of a circumferential groove.

After passing between the pair of rollers, the rolled dough sheet may be treated as follows:
1. Cooked/served 2. Cooked/chilled 3. Cooked/frozen 4. Cooked/dehydrated 5. Cooked/retorted 6. Raw/frozen 7. Raw/dehydrated 8. Raw/chilled 9. Steamed/cooked 10. Steamed/chilled 11. Steamed/dehydrated 12. Microwave/chilled. Cooking conditions may be from 1 to 6 minutes in boiling water and dehydration conditions may be from 4 to 10 hours at a temperature from 50° to 65°C and 70-85% humidity in a humidity dryer or 80° to 150°C for 10 minutes to 2 hours in a hot air dryer. Steaming conditions may be from 88° to 99°C from 20 to 50 sec. and chilling temperatures may be from -2° to +10°C.

The dough sheet that is used for rolling may be a conventional dough sheet obtained either by dough sheeting or by extrusion. When obtained by a sheeting process, the dough may be a single sheet or it may be laminated. The thickness of the dough sheet may conveniently be from 0.76 to 17.78 mm (0.03 in. 0.70 in.) and preferably from 1.02 to 1.52 (0.04 in. to 0.060 in).

The dough used for forming the dough sheet may be prepared from conventional flours such as, for example, Durum flour, Durum semolina, regular wheat flour, whole wheat flour, rice flour, pre-gelatinised rice flour, corn flour, pre-gelatinised corn flour, potato flour, pre-gelatinised potato flour, pea flour, soy flour and farina.

Other conventional ingredients which may be used in the preparation of the dough include, protein materials such as, for example, whole egg, egg white, egg yolk, wheat gluten, whey protein concentrate and soy protein isolate, strach-complexing agents such as, for example, glyceryl monostearate, gums such as, for example, sodium alginate and propylene glycol alginate, and vegetable materials such as, for example, spinach, carrot and tomato.

The moisture content of the dough is usually from 28% to 34% by weight based on the weight of the dough. The moisture sources may be water, liquid eggs, fresh vegetables or a combination thereof.

The width of the dough sheet is not critical but a lasagna dough sheet usually has a width of about 3 in. The width of the marginal edges of the dough sheet positioned laterally of the circumferential grooves where the waves are formed is preferably less than 1 in. and is conveniently from 2.54 to 19.05 mm (0.1 to 0.75 in). Generally, the less the width of the marginal edges, the better the wave formation.

The thickness of the dough sheet, the centre surface clearance and the lateral surface clearance between the pair of rollers may be varied to obtain a preferred ridge height of the rolled dough sheet. The ridge height i.e. the height of the ridge above the surface of the dough sheet, is preferably from 0.03 to 1.02 mm (0.001 to 0.04 in). and especially from 0.05 to 0.76 mm (0.002 to 0.03 in.) We have found that generally a dough sheet with a higher ridge had more waves and retained them better on cooking. We have found that generally a thicker dough sheet, a larger centre surface clearance and a smaller lateral surface clearance between the pair of rollers help to produce a higher ridge. The presence of a pair or circumferential ridges on the counter roller may reduce the height of the ridge of the rollerd dough sheet.

The present invention is especially useful for preparing lasagna products.

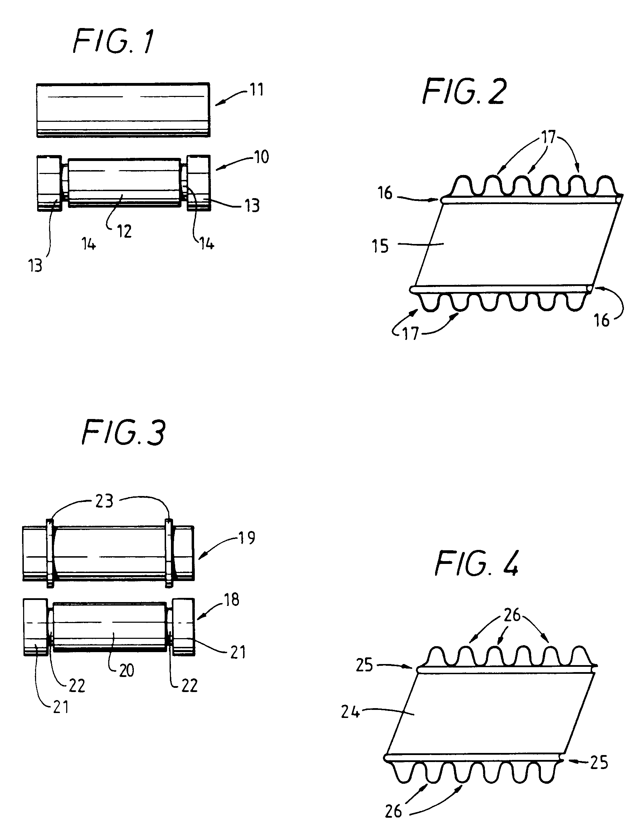

The present invention will now be further illustrated by way of example only with reference to the accompanying drawings in which
**Figure 1**
   represents a diagrammatic view of one pair of rollers of the apparatus according to this invention,
**Figure 2**
   represents a perspective view of a lasagna product produced by the pair or rollers of Figure 1,
**Figure 3**
   represents a diagrammatic view of another pair of rollers of the apparatus according to this invention, and
**Figure 4**
   represents a perspective view of a lasagna product produced by the pair of rollers of Figure 3.

Referring to the drawings, Figure 1 shows a pair of rollers consisting of a primary roller 10 and a counter roller 11. The primary roller is profiled with a recessed centre surface 12, lateral surfaces 13 and circumferential grooves 14 between the centre and lateral surfaces.

Figure 2 shows a lasagna sheet 15 produced by the pair of rollers of Figure 1 having ridge structures 16 and waved marginal edges 17. The ridge is a solid structure.

Figure 3 shows a pair of rollers consisting of a primary roller 18 and a counter roller 19. The primary roller is profiled with a recessed centre surface 20, lateral surfaces 21 and circumferential grooves 22 between the centre and lateral surfaces. The counter roller 19 is provided with a pair of circumferential ridges 23 in alignment with the grooves 22 of the primary roller 18.

Figure 4 shows a lasagna sheet 24 produced by the pair of rollers of Figure 3 having ridge/groove structures 25 and waves marginal edges 26. The ridge/groove is a hollow concave structure.

In operation rollers 10 and 11 or 18 and 19 are caused to rotate in opposite directions by conventional means (not shown) and the dough sheet of the desired thickness and width is fed into the nip. The sheet exits the pair of rollers as a continuous sheet of lasagna with waved marginal edges.

The following examples further illustrate the present invention. Parts and percentages are given by weight and the linear measurements in the Tables are given in inches. The width of the dough sheet is such that it extends 1 inch laterally of each groove in the primary roller.

### Examples 1-6

A dough made of 74% of Durum flour, 15% of liquid whole egg and 11% of water is prepared and six dough sheets having the initial thickness indicated in Table 1 are initially prepared in a regular roller. The dough sheets are passed through a pair of rollers similar to that shown in Figure 1 wherein the clearance at the centre surfaces is 0.53 mm (0.021 in). and the clearance at the lateral surfaces is 0.43 mm (0.017 in). After rolling, the dough sheets are formed with waves at their marginal edges and are then cooked by boiling in water for 3 minutes. From the results shown in Table 1, it can be seen that more waves are formed from a dough sheet with a higher ridge. In addition, the dough sheet with the higher ridge retained the waves better after cooking by boiling for 3 minutes in water.

**TABLE 1**

| Ex. | Initial dough sheet | Dough sheet thickness (after rolling) | | Ridge height | Dough sheet thickness (after cooking) | | Ridge height | Waves No per 254 mm (10 inches) |
|---|---|---|---|---|---|---|---|---|
| | Thickness mm (in.) | Center | ends | | Center | ends | | |
| 1 | 1.78 (0.070) | 1.14 (0.045) | 0.79 (0.031) | 0.58 (0.023) | 1.40 (0.055) | 1.14 (0.045) | 0.69 (0.027) | 13 |
| 2 | 1.65 (0.065) | 1.07 (0.042) | 0.81 (0.032) | 0.46 (0.018) | 1.35 (0.053) | 1.14 (0.045) | 0.43 (0.017) | 12 |
| 3 | 1.52 (0.060) | 1.07 (0.042) | 0.84 (0.033) | 0.41 (0.016) | 1.35 (0.053) | 1.12 (0.044) | 0.28 0.011 | 12 |
| 4 | 1.40 (0.055) | 1.04 (0.041) | 0.81 (0.032) | 0.23 (0.009) | 1.37 (0.054) | 1.07 (0.042) | 0.10 0.004 | 11 |
| 5 | 1.27 (0.050) | 1.02 (0.040) | 0.81 (0.032) | 0.25 (0.010) | 1.40 (0.055) | 1.07 (0.042) | 0.05 0.002 | 11 |
| 6 | 1.14 (0.045) | 1.02 (0.040) | 0.79 (0.031) | 0.08 (0.003) | 1.27 (0.050) | 1.09 (0.043) | 0.08 0.003 | 11 |

### Examples 7-10

A dough is prepared as in Examples 1-6 and four dough sheets having an initial thickness of 1.83 mm (0.072 in). are initially prepared in a regular roller. The dough sheets are passed through a pair or rollers similar to that shown in Figure 1 wherein the clearances at the centre surfaces are different as shown in Table 2.

**TABLE 2**

| Ex. | Initial dough sheet | Roller's clearance | | Dough sheet thickness (after rolling) | | Comparison of ridge height | Waves No per 254 mm (10 inches) |
|---|---|---|---|---|---|---|---|
| | Thickness mm (in.) | Center | ends | Center | ends | | |
| 7 | 1.83 (0.072) | 0.56 (0.022) | 0.38 (0.015) | 1.12 (0.044) | 0.71 (0.028) | | 14 |
| 8 | 1.83 (0.072) | 0.76 (0.030) | 0.38 (0.015) | 1.42 (0.056) | 0.71 (0.028) | | 12 |
| 9 | 1.83 (0.072) | 1.02 (0.040) | 0.38 (0.015) | 1.52 (0.060) | 0.79 (0.031) | | 9 |
| 10 | 1.83 (0.072) | 1.27 (0.050) | 0.38 (0.015) | 1.78 (0.070) | 0.79 (0.031) | | 8 |

From the results in Table 2, it can be seen that a reduction in the clearances at the centre surfaces of the rollers results in an increase in the height of the ridge of the dough sheet and an increase in the number of waves formed.

### Examples 11 and Comparative Example A

A dough is prepared as in Examples 1-6 and two dough sheets having an initial thickness of 1.78 mm (0.070 in). are initially prepared on a regular roller. The dough sheets are passed through a pair of rollers similar to that shown in Figure 1 wherein the clearances at the lateral surfaces are different as shown in Table 3. The dough sheet is then boiled for 3 minutes in water. The results are shown in Table 3.

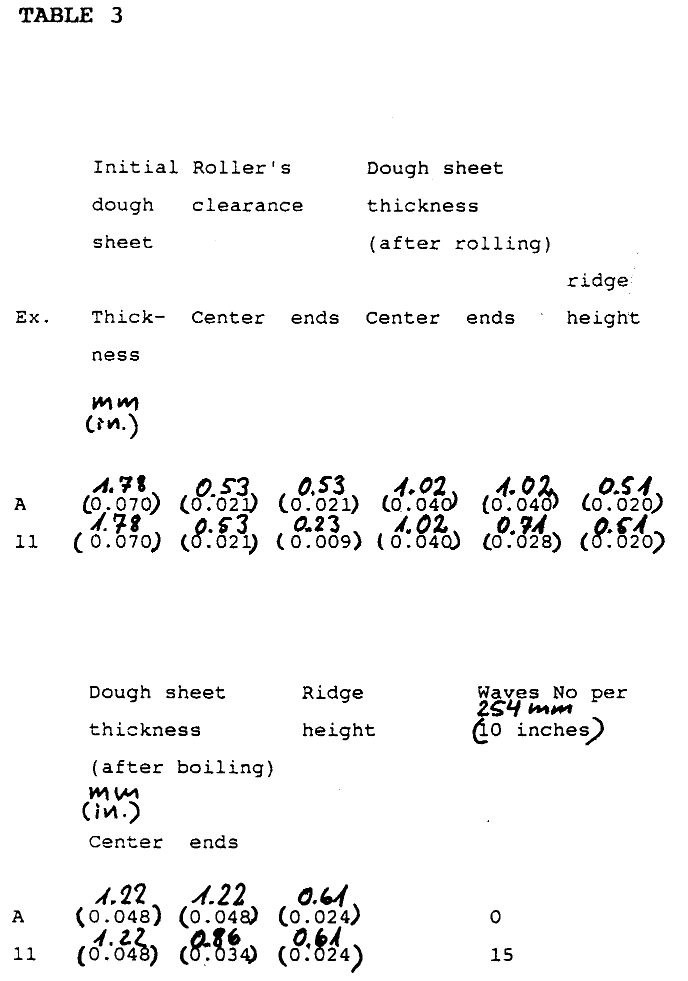

The results in Table 3 show that the reduction in clearance at the lateral surfaces creates a reduced thickness at the lateral surfaces of the dough sheet and after boiling an increase in the number of waves.

### Examples 12-17

A dough is prepared as in Examples 1-6 and two sets of three dough sheets with different initial thickness as shown in Table 4 are initially prepared on a regular roller. The dough sheets are used in two tests where they are passed through a pair of rollers similar to that shown in Figure 1 and where the clearance at the lateral surface of the rollers for each test is shown in Table 4. The rolled dough sheets are cooked by boiling in water for 3 minutes and the results are as follows.

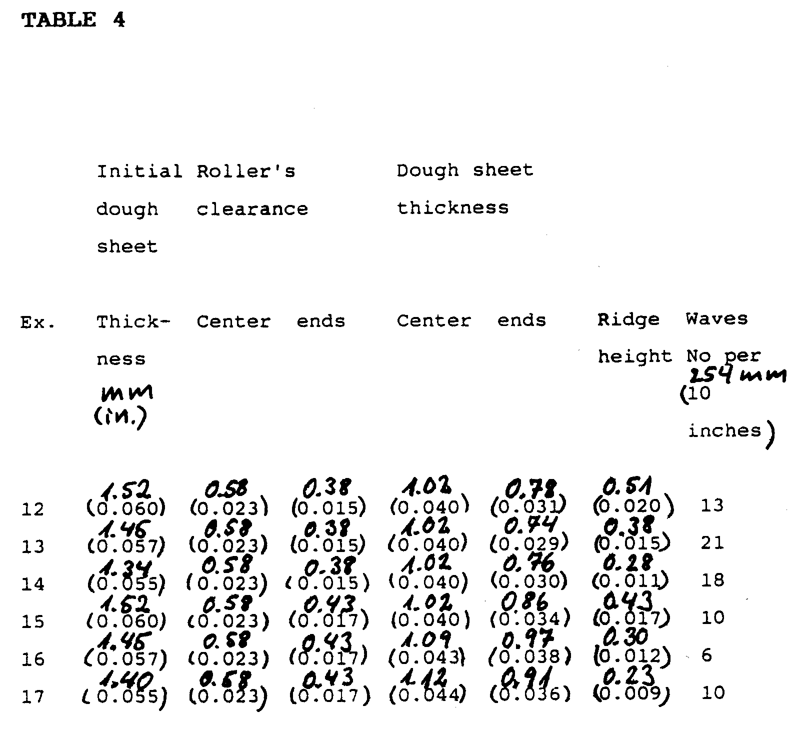

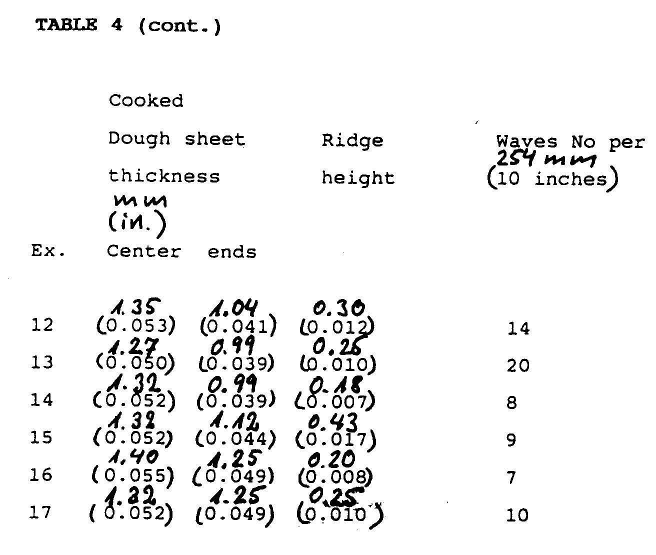

The results in Table 4 show that significantly more waves are created when the clearance at the lateral surfaces of the rollers is 0.05 mm (0.002 inches) less which creates a greater difference in thickness between the centre and ends except for Example 14 after cooking when the number of waves is less than for the cooked dough sheet of Example 17

### Example 18

A dough is prepared as in Examples 1-6 and a dough sheet having a thickness of 1.45 mm (0.057 in). is passed through a pair of rollers similar to that shown in Figure 3 wherein the clearance at the centre surfaces is 0.58 mm (0.023 in.) and the clearance at the lateral surfaces is 0.33 mm (0.013 in). and a circumferential ridge is formed on each side of the counter roller in alignment with the corresponding groove on the primary roller, the height and width of the ridge being less than the depth and width of the groove.

The dough sheet is passed through the roller and then boiled in water for 3 minutes. The results are shown in Table 5.

**TABLE 5**

| Ex. | Dough sheet thickness mm (in.) | | Ridge height | Uncooked Waves No per 254 mm (10 in.) | Cooked dough sheet thickness | | Ridge height | Cooked waves No per 254 mm (10 in.) |
|---|---|---|---|---|---|---|---|---|
| | Center | ends | | | Center | ends | | |
| 18 | 1.04 (0.041) | 0.84 (0.033) | 0.20 (0.008) | 10 | 1.32 (0.052) | 1.07 (0.042) | 0.23 (0.009) | 12 |

It can be seen that the presence of the circumferential ridges on the counter roller aligned with the grooves on the primary roller has a similar effect to a system where only a groove is present on the primary roller in producing a dough product with a satisfactory number of marginal waves.

## Claims

1. An apparatus for the production of a dough sheet having waves at the marginal edges comprising a pair of oppositely rotatable rollers (10, 11) consisting of a primary roller (10) and a counter roller (11) adapted to receive a dough sheet between them, characterised in that the clearance between the pair of rollers (10, 11) is greater at the centre surfaces (12) than at the lateral surfaces (13) and wherein one or both lateral surfaces of at least one of the rollers (10, 11) is formed with a circumferential groove (14).

2. An apparatus according to claim 1 wherein the clearance between the pair of rollers (10, 11) at the centre surfaces (12) is from 0.25 to 1.27 mm (0.01 to 0.05 inches).

3. An apparatus according to claim 1 wherein the clearance between the pair of rollers (10, 11) at the lateral surfaces (13) is from 0.13 to 0.64 mm (0.005 to 0.025 inches).

4. An apparatus according to claim 1 wherein the difference in the clearance between the centre surfaces (12) and the lateral surfaces (13) of the pair of rollers (10, 11) is from 0.03 to 1.02 mm (0.001 to 0.04 inches).

5. An apparatus according to claim 1 wherein the circumferential grooves (14) are positioned adjacent the lateral edges of the centre surface (12) of the primary roller (10).

6. An apparatus according to claim 1 wherein the depth of the circumferential groove (14) is from 1.02 to 6.35 mm (0.04 to 0.25 inches).

7. An apparatus according to claim 1 wherein the width of the circumferential groove (14) is from 0.51 to 5.08 mm (0.02 to 0.2 inches).

8. An apparatus according to claim 1 wherein a pair of circumferential ridges (23) are formed on the counter roller (19) the said ridges (23) being in alignment with the grooves (22) of the primary roller (18) and having a height and width less then the depth and width of the grooves (22).

9. A process for the production of a dough sheet having waves at the marginal edges which comprises passing a dough sheet between a pair of oppositely rotating rollers (10, 11) consisting of a primary roller (10) and a counter roller (11) characterised in that the clearance between the pair of rollers (10, 11) is greater at the centre surfaces (12) then at the lateral surfaces (13), wherein each lateral surface (13) of at least one of the rollers (10, 11) is formed with a circumferential groove (14), and wherein each marginal edge of the dough sheet is positioned laterally of a circumferential groove (14).

10. A process according to claim 9 wherein the thickness of the dough sheet is from 0.76 to 1.78 mm (0.03 to 0.07 inches).

## Patentansprüche

1. Vorrichtung zum Herstellen eines Teigblattes, das Wellen an den Randkanten aufweist, mit einem Paar entgegengesetzt drehbarer Walzen (10, 11), bestehend aus einer Hauptwalze (10) und einer Gegenwalze (11), die dafür ausgebildet sind, ein Teigblatt zwischen sich aufzunehmen, dadurch gekennzeichnet, daß der Abstand zwischen den beiden Walzen (10, 11) an den mittleren Oberflächen (12) größer ist als an den seitlichen Oberflächen (13), wobei eine oder beide seitliche Oberflächen zumindest einer der Walzen (10, 11) mit einer Umfangsnut (14) versehen ist.

2. Vorrichtung nach Anspruch 1, bei welcher der Abstand zwischen den beiden Walzen (10, 11) an den mittleren Oberflächen (12) 0,25 bis 1,27 mm (0,01 bis 0,05 Zoll) ist.

3. Vorrichtung nach Anspruch 1, bei welcher der Anstand zwischen den beiden Walzen (10, 11) an den seitlichen Oberflächen (13) 0,13 bis 0,64 mm (0,005 bis 0,025 Zoll) ist.

4. Vorrichtung nach Anspruch 1, bei welcher die Abstandsdifferenz zwischen den mittleren Oberflächen (12) und den seitlichen Oberflächen (13) der beiden Walzen (10, 11) 0,03 bis 1,02 mm (0,001 bis 0,04 Zoll) ist.

5. Vorrichtung nach Anspruch 1, bei welcher die Umfangsnuten (14) neben den Seitenkanten der mittleren Oberfläche (12) der Hauptwalze (10) angeordnet sind.

6. Vorrichtung nach Anspruch 1, bei welcher die Tiefe der Umfangsnut (14) 1.02 bis 6,35 mm (0,04 bis 0,25 Zoll) ist.

7. Vorrichtung nach Anspruch 1, bei welcher die Breite der Umfangsnut (14) 0,51 bis 5,08 mm (0,02 bis 0,2 Zoll) ist.

8. Vorrichtung nach Anspruch 1, bei welcher zwei Umfangsrippen (23) auf der Gegenwalze (19) ausgebildet sind, wobei die Rippen (23) mit den Nuten (22) der Hauptwalze (18) ausgerichtet sind und eine Höhe und eine Breite haben, die kleiner ist als die Tiefe bzw. Breite der Nuten (22).

9. Verfahren zum Herstellen eines Teigblattes, das Wellen an den Randkanten aufweist, welches Verfahren das Durchführen eines Teigblattes zwischen einem Paar entgegengesetzt rotierender Walzen (10, 11) umfaßt, bestehend aus einer Hauptwalze (10) und einer Gegenwalze (11), dadurch gekennzeichnet, daß der Anstand zwischen den beiden Walzen (10, 11) an den mittleren Oberflächen (12) größer ist als an den seitlichen Oberflächen (13), wobei jede seitliche Oberfläche (13) zumindest einer der Walzen (10, 11) mit einer Umfangsnut (14) versehen wird, und wobei jede Randkante des Teigblattes seitlich von einer Umfangsnut (14) angeordnet wird.

10. Verfahren nach Anspruch 9, bei welchem die Dicke des Teigblattes 0,76 bis 1,78 mm (0,03 bis 0,07 Zoll) ist.

## Revendications

1. Appareil pour la production d'une feuille de pâte ayant des ondulations aux bords marginaux, comportant deux cylindres (10, 11) pouvant tourner en opposition l'un à l'autre et constitués d'un cylindre principal (10) et d'un contre-cylindre (11) destinés à recevoir entre eux une feuille de pâte, caractérisé en ce que l'écartement entre les deux cylindres (10, 11) est plus grand aux surfaces centrales (12) qu'aux surfaces latérales (13) et en ce que l'une des surfaces latérales ou les deux surfaces latérales d'au moins l'un des cylindres (10, 11) sont formées de façon à présenter une gorge circonférentielle (14).

2. Appareil selon la revendication 1, dans lequel l'écartement entre les deux cylindres (10, 11) aux surfaces centrales (12) est de 0,25 à 1,27 mm (0,01 à 0,05 inch).

3. Appareil selon la revendication 1, dans lequel l'écartement entre les deux cylindres (10, 11) aux surfaces latérales (13) est de 0,13 à 0,64 mm (0,005 à 0,025 inch).

4. Appareil selon la revendication 1, dans lequel la différence d'écartement entre les surfaces centrales (12) et les surfaces latérales (13) des deux cylindres (10, 11) est de 0,03 à 1,02 mm (0,001 à 0,04 inch).

5. Appareil selon la revendication 1, dans lequel les gorges circonférentielles (14) sont placées de façon à être adjacentes aux bords latéraux de la surface centrale (12) du cylindre principal (10).

6. Appareil selon la revendication 1, dans lequel la profondeur de la gorge circonférentielle (14) est de 1,02 à 6,35 mm (0,04 à 0,25 inch).

7. Appareil selon la revendication 1, dans lequel la largeur de la gorge circonférentielle (14) est de 0,51 à 5,08 mm (0,02 à 0,2 inch).

8. Appareil selon la revendication 1, dans lequel deux nervures circonférentielles (23) sont formées sur le contre-cylindre 19, lesdites nervures (23) étant en alignement avec les gorges (22) du cylindre principal (18) et ayant une hauteur et une largeur inférieures à la profondeur et à la largeur des gorges (22).

9. Procédé pour la production d'une feuille de pâte ayant des ondulations aux bords marginaux, qui comprend le passage d'une feuille de pâte entre deux cylindres (10, 11) tournant en étant opposés l'un à l'autre et constitués d'un cylindre principal (10) et d'un contre-cylindre (11), caractérisé en ce que l'écartement entre les deux cylindres (10, 11) est plus grand aux surfaces centrales (12) qu'aux surfaces latérales (13), chaque surface latérale (13) d'au moins l'un des cylindres (10, 11) étant formée de façon à présenter une gorge circonférentielle (14) et chaque bord marginal de la feuille de pâte étant placé latéralement à une gorge circonférentielle (14).

10. Procédé selon la revendication 9, dans lequel l'épaisseur de la feuille de pâte est de 0,76 à 1,78 mm (0,03 à 0,07 inch).
